# EUROPÄISCHE PATENTSCHRIFT

(11) **EP 1 877 499 B1**
(45) Veröffentlichungstag und Bekanntmachung des Hinweises auf die Patenterteilung: **18.04.2012**
(21) Anmeldenummer: 06724678.5
(22) Anmeldetag: 02.05.2006
(51) Int. Cl.: C09C 1/62, C09C 1/64, C09D 5/44

(54) **Verwendung von Metallpigmenten als Elektrotauchlackpigmente**
Use of metallic pigments as electrodeposition paint pigments
Utilisation des pigments métalliques comme pigments de peinture par éléctrolyse

(30) Priorität: 02.05.2005 DE 102005020763
(43) Veröffentlichungstag der Anmeldung: 16.01.2008
(73) Patentinhaber: Eckart GmbH, 91235 Hartenstein (DE)
(72) Erfinder: SCHUSTER, Thomas, 91207 Lauf (DE); SCHRAMM, Christian, 91217 Hersbruck (DE); MAUL, Robert, 90610 Winkelhaid (DE); WEISS, Harald, 90765 Fürth (DE); HECKEL, Caroline, 91235 Velden (DE)
(74) Vertreter: Walcher, Armin
(86) Internationale Anmeldenummer: PCT/EP2006/004088
(87) Internationale Veröffentlichungsnummer: WO 2006/117188

(56) Entgegenhaltungen:
- EP-A- 0 280 749
- WO-A-2005/063897
- US-A- 5 332 767
- US-A- 5 755 869

## Beschreibung

Die Erfindung betrifft einen anodischen Elektrotauchlack, der Metalleffektpigmente enthält. Die Erfindung betrifft des weiteren ein Verfahren zur Herstellung eines anodischen Elektrotauchlacks sowie die Verwendung von plättchenförmigen Metalleffektpigmenten in einem Elektrotauchlack oder bei der Elektrotauchlackierung. Die Erfindung betrifft auch die Verwendung des Elektrotauchlacks sowie einen beschichteten Gegenstand.

Die Elektrotauchlackierung (ETL) ist ein Verfahren zur Applikation bestimmter wasserlöslicher Lacke, sogenannter Elektrotauchlacke, auf elektrisch leitfähigen Untergründen, wie beispielsweise einem Werkstück. Zwischen einem in ein Lackbad eingetauchten Werkstück und einer Gegenelektrode wird ein elektrisches Gleichspannungsfeld angelegt. Es wird dabei unterschieden zwischen der anodischen Abscheidung, der sogenannten anodischen Elektrotauchlackierung (ATL), bei der das Werkstück als Anode oder Pluspol geschaltet ist, und der kathodischen Abscheidung, der sogenannten kathodischen Elektrotauchlackierung (KTL), bei der das Werkstück als Kathode oder als Minuspol geschaltet ist.

Das Lackbindemittel enthält funktionelle Gruppen bestimmter Polarität, die durch Neutralisation in Salzform und dadurch in Wasser kolloidal gelöst vorliegen. In der Nähe der Elektrode (innerhalb der Diffusionsgrenzschicht) entstehen aufgrund der Hydrolyse bei der KTL Hydroxidionen bzw. bei der ATL H⁺-Ionen. Diese Ionen reagieren mit dem Bindemittelsalz, wobei die funktionalisierten Bindemittel ihre Salzform verlieren ("Aussalzen"), wasserunlöslich werden und an der Oberfläche des Werkstückes koagulieren. Im weiteren Verlauf verlieren die koagulierten Bindemittelteilchen infolge von Elektroosmosevorgängen an Wasser, wobei eine weitere Verdichtung auftritt. Schließlich wird das Werkstück dem Tauchbad entnommen, in einem mehrstufigen Spülprozeß von nicht koagulierten Lackteilchen befreit und bei Temperaturen von 150 - 190 °C eingebrannt (Brock, Groteklaes, Mischke, "Lehrbuch der Lacktechnologie" 2. Auflage, Vincentz Verlag1998, S.288 ff).

Die Elektrotauchlackierung hat gegenüber konventionellen Lackierverfahren wie die Naßlackierung oder Pulverlackierung mehrere wirtschaftliche und ökologische Vorteile.

In erster Linie ist hier die exakt einstellbare Schichtdicke zu nennen. Im Vergleich mit Pulverlackierungen werden bei der Elektrotauchlackierung auch schwer zugängliche Stellen des Werkstücks einheitlich lackiert. Dies resultiert aus folgender Tatsache: zunächst findet die Abscheidung des Bindemittels an Stellen hoher Feldstärke wie Ecken und Kanten statt. Der sich bildende Film weist jedoch einen hohen elektrischen Widerstand auf. Daher verschieben sich die Feldlinien zu anderen Bereichen des Werkstücks und konzentrieren sich am Schluß des Beschichtungsvorganges ganz auf die unzugänglichsten Stellen, wie beispielsweise im Inneren des Werkstückes liegende Bereiche oder Stellen (Innenbeschichtung). Mit der Elektrotauchlackierung (ETL) sind mithin beliebig geformte Werkstücke lackierbar, solange sie elektrisch leitfähig sind. Mit der ETL sind weiterhin vorteilhaft Eigenschaften wie minimale Lösemittelemissionen, optimale Materialausbeute und Nichtbrennbarkeit verbunden. Man erhält Tropfen- und läuferfreie Anstriche. Die Elektrotauchlackierung wird automatisiert durchgeführt und ist dadurch ein sehr preisgünstiges Lackierverfahren, zumal sie sich bei nur geringen Stromdichten von einigen mA/cm² durchführen läßt.

Aufgrund des einfachen und höchst kostengünstigen Applikationsverfahrens findet die Elektrotauchlackierung zur Zeit in zahlreichen Systemen ihren Einsatz. Am gängigsten sind Grundierungen, z.B. bei der Automobilserienlackierung, und einschichtige Decklackierungen zu nennen. ETL-Lackierungen finden sich beispielsweise auf Radiatoren, Schaltschränken, Büromöbel, im Bau, bei Eisen- und Haushaltswaren, in der Lagertechnik bzw. beim Regalbau, in der Klima- und Lichttechnik und im Apparate- und Maschinenbau.

Die anodische Tauchlackierung (ATL) wird für spezielle Einsatzgebiete und Materialien angewandt. Sie ist vor allem geeignet für die Decklackierung von Nichteisen-Metallen mit hochtransparenten Schutzschichten sowie für die Abscheidung gefärbter Lacke. Durch Einbrennen erzielt man sehr homogene, glatte und korrosionsresistente Oberflächen. Diese weisen nahezu keine Schichtdickenstreuung (Kantenaufbau) auf. Aus diesem Grund lassen sich auch geometrisch komplex geformte Gegenstände lückenlos mit diesem Verfahren beschichten. Ebenso erreichen die durch anodische Elektrotauchlackierung aufgebrachten Lacke sehr gute Werte in der Temperatur und in der Alterungsbeständigkeit. Die Umweltverträglichkeit aufgrund der weitgehenden Abwesenheit von organischem Lösungsmittel rundet die Vorteile der anodischen Tauchlackierung als höchst effizientes und attraktives Beschichtungsverfahren ab.

Bisher im Gebrauch befindliche Elektrotauchlacke sind Wasserlacke, die als Bindemittel meist Epoxidharze, seltener auch Polyacrylate enthalten. Die Elektrotauchlacke können konventionelle Farbpigmente enthalten, wobei es sich i.d.R. um organische und anorganische Farbpigmente handelt. Die Palette der tatsächlich kommerziell eingesetzten Farbtöne ist jedoch eng begrenzt. Die Verwendung von Effektpigmenten im Elektrotauchlack ist bisher jedoch kommerziell nicht bekannt.

Die US 5,756,869 beschreibt mit Fettsäuren oder einem maleinisierten alpha-Olefin gegen Gasung stabilisierte Metallpigmente.

Die WO 2005/063897 A2 ist ein Dokument gemäß Art. 54(3) EPÜ und betrifft die Bereitstellung beschichteter Metallpigmente, eine Beschichtungszusammensetzung, ein Verfahren zur Hersteilung der beschichteten Metallpigmente und deren Verwendung.

Die DE 199 60 693 A1 offenbart ein Verfahren zur anodischen Elektrotauchlackierung, welches 1 bis 15 Gew-%, bezogen auf den Bindemittelfestkörper des Elektrotauchlackes eines oder mehrerer Phosphorsäure-Epoxyester und/oder Phosphonsäure-Epoxyester enthält. In der DE 199 60 693 A1 ist angegeben, daß dem Elektrotauchlack auch Pigmente, wie beispielsweise Metallpigmente, zugesetzt werden könnten. Es hat sich jedoch gezeigt, daß der bloße Zusatz von Metallpigmenten bei dem aus der DE 199 60 693 A1 bekannten anodischen Elektrotauchlackverfahren nicht ausreicht, um die Metallpigmente auf einem Werkstück abzuscheiden.

Die EP 0 477 433 A1 offenbart mit Kunstharzen beschichtete Metallpigmente, wobei zwischen Metallpigmentoberfläche und der Kunstharzschicht eine sehr dünne Siloxanschicht als Haftvermittler aufgebracht ist. Diese Pigmente lassen sich jedoch nicht als solche zur Elektrotauchlackierung einsetzen. Ferner ist aus dieser Schrift kein Hinweis zur Elektrotauchlackierung vorhanden.

Aufgabe der vorliegenden Ereindung ist es, Metallpigmente bereit zu stellen, die bei der anodischen Elektrotauchlackierung auf einem Werkstück in einem Lack abgeschieden werden können,

Die Metallpigmente müssen korrosionsstabil gegenüber dem wässrigen Elektrotauchlackmedium sein und sich auch nach mehr als 60 Tagen Baddauer reproduzierbar abscheiden lassen, Damit hergestellte Elektrotauchlacküberzüge sollen einen metallischen Effekt aufweisen, der in seiner optischen Qualität vorzugsweise derjenigen von Pulverlackierungen entspricht.

Ferner ist es eine weitere Aufgabe der vorliegenden Erfindung ein Verfahren zur Herstellung derartiger Metalleffektpigmente zu finden.

Die Aufgabe wurde gelöst, durch Verwendung von Metallpigmenten als Elektrotauchlackpigmente gemäß Anspruch 1.

Bevorzugte Weiterbildungen der Verwendung sind in den Unteransprochen 2 bis 12 angegeben.

Die der Erfindung zugrundeliegende Aufgabe wird auch durch die Verwendung von Metallpigmenten nach einem der Ansprüche 1 bis 12 in einem Elektrotauchlack oder beim Elektrotauchlackieren gelöst

Die Metallpigmente können aus Metallen oder Legierungen bestehen, die aus der Gruppe, die aus Aluminium, Kupfer, Zink, Messing, Eisen, Titan, Chrom, Nickel, Stahl, Silber und deren Legierungen und Gemischen davon besteht, ausgewählt werden. Bevorzugt sind hierbei Aluminiumpigmente sowie Messingpigmente, wobei Aluminiumpigmente besonders bevorzugt sind.

Die Metallpigmente sind immer plättchenförmiger Natur. Hierunter versteht man Pigmente, bei denen die Längsausdehnung mindestens das Zehnfache, bevorzugt mindestens das Zwanzigfache und besonders bevorzugt mindestens das Fünfzigfache der mittleren Dicke beträgt. Im Sinne der Erfindung werden, wenn Metallpigmente erwähnt werden, immer plättchenförmige Metallpigmente gemeint.

Die in dem erfindungsgemäßen Elektrotauchlack verwendeten Metallpigmente besitzen mittlere Längsausdehnungen, die mittels Lasergranulometrie (Cilas 1064, Fa. Cilas) als Kugeläquivalente ermittelt und als d₅₀-Wert der entsprechenden Größensummendurchgangsverteilung dargestellt werden. Diese d₅₀-Werte betragen 2 bis 100 µm, bevorzugt 4 bis 35 µm und ganz besonders bevorzugt von 5 bis 25 µm.

Es wurde überraschend festgestellt, dass sich sehr große Pigmentteilchen mit einem d₅₀-Wert oberhalb von 100 µm praktisch kaum noch abscheiden lassen. Offenbar sind die Migrations- und Abscheidungseigenschaften bei größeren Teilchen erheblich reduziert. Aus derartig groben Pigmentverteilungen werden nur noch die Fraktionen unterhalb von ca. 100 µm abgeschieden (Feinkornanteil). Damit wird jedoch die Größe und Größenverteilung der abgeschiedenen Teilchen im Vergleich zu den eingesetzten erheblich reduziert. Aus diesem Grunde sind kleinere Teilchen bevorzugt. Bei einem d₅₀-Wert in einem Bereich von 4 µm bis ca. 35 µm werden die erfindungsgemäßen Pigmente ohne Probleme in ihrer gesamten Größenverteilung abgeschieden. Zudem ermöglichen Pigmente bei einer Größe von ca. 2 bis 35 µm eine Baddauer bzw. -stabilität von jedenfalls mehr als 60 Tagen. Unterhalb von einem d₅₀ von 4 µm sind die Teilchen zu fein, um einen ansprechenden optischen Effekt zu produzieren. Auch können hier aufgrund der sehr hohen spezifischen Oberfläche der feinen Pigmente gelegentlich Gasungsprobleme im wässrigen Elektrotauchlackmedium auftreten.

Die mittlere Dicke der efindungsgemäßen Metallpigmente hingegen beträgt 40 bis 5000 nm, bevorzugt 65 bis 800 nm und besonders bevorzugt 250 bis 500 nm.

Elektrotauchlacke sind immer wasserbasierende Systeme. Aus diesem Grunde müssen in einem Elektrotauchlack enthaltene Metallpigmente mit einer Schutzschicht versehen sein, um den korrosiven Einfluß des Wassers auf das Metallpigment zu unterbinden. Zudem müssen sie über geeignete Oberflächenladungen verfügen, um im elektrischen Feld eine ausreichende elektrophoretische Beweglichkeit zu besitzen.

Überraschenderweise werden diese Eigenschaften erfüllt, wenn Metallpigmente mit einem Beschichtungsmittel beschichtet sind, wobei das Beschichtungsmittel Bindemittelfunktionalitäten von anodischen Tauchlack-Bindemitteln, eine oder mehrere funktionelle Gruppen zur Anhaftung oder Anbindung an die Pigmentoberfläche und eine Säurezahl von 15 bis 300 mg KOH/g Beschichtungsmittel aufweist.

Unter dem Begriff "Bindemittelfunktionalitäten" werden im Sinne der Erfindung funktionelle Gruppen verstanden, die für Bindemittel eines anodischen Tauchlackes charakteristisch sind.

Unter dem Begriff "Anhaftung" werden im Sinne der Erfindung nicht kovalente Wechselwirkungen verstanden, wie z.B. hydrophobe Wechselwirkungen, Wasserstoffbrückenbindungen, ionische Wechselwirkungen, van-der-Waals-Kräfte, etc., die zu einer Immobilisierung des Beschichtungsmittels auf der Pigmentoberfläche führen.

Unter dem Begriff "Anbindung" werden im Sinne der Erfindung kovalente Bindungen verstanden, die zu einer kovalenten Immobilisierung des Beschichtungsmittels auf der Pigmentoberfläche führen.

Gemäß einer bevorzugten Weiterbildung der Erfindung sind die Metallpigmente leafing-Metallpigmente und/oder Metallpigmente, die mit einer Kunstharzschicht beschichtet oder überzogen sind, und die mit mindestens einem Beschichtungsmittel behandelt sind, welches für Elektrotauchlacke geeignete Bindemittelfunktionalitäten enthält.

Bei den leafing-Metallpigmenten handelt es sich um Metallpigmente, welche sich aufgrund einer Unverträglichkeit ihrer oberflächenchemischen Eigenschaften mit dem umgebenden Bindemittel an der Oberfläche oder in der Nähe der Oberfläche der Lackapplikation anordnen. Es können alle bekannten leafing-Metallpigmente verwendet werden. Bevorzugt handelt es sich um mit, vorzugsweise gesättigten, Fettsäuren mit 10 bis 30 C-Atomen vermahlene und/oder nachpolierte Metallpigmente. Die Fettsäuren können linear oder verzweigt sein. Besonders bevorzugt werden die leafing-Pigmente mit Stearinsäure und/oder Palmitinsäure vermahlen und/oder nachpoliert. Die hierbei verwendete Stearin- bzw. Palmitinsäure sind von technischer Qualität, d.h. sie enthalten geringe Mengen höherer und/oder niedrigerer Fettsäurehomologe.

Weiterhin kann es sich bei leafing-Metallpigmenten um Metallpigmente handeln, die mit Alkylketten-enthaltende Additive behandelt worden sind. Beispiele hierfür sind Decylphosphonsäure oder Alkylalkoholphosphorsäureester wie das Produkt FB 7234/S der Fa Zschimmer & Schwarz GmbH&Co (Max-Schwarz-Str. 3-5, D-56112 Lahnstein/Rhein).

Beispiele für Aluminiumpigmente mit leafing- Eigenschaften sind die leafing Hydroxalreihe der Fa. Eckart sowie der leafing Silberdollar EBP 251 der Fa. Silberline, USA.

Überraschenderweise erhält man mit den erfindungsgemäßen Metallpigmenten, die auf einem leafing-Metallpigment basieren, nach der Elektrotauchlackierung ebenfalls eine hochbrillante Metalliclackierung, die ebenfalls einen leafing-Effekt aufweist.

Besonders überraschend ist hier jedoch die Tatsache, dass diese leafing-Metallpigmente in der Lackschicht fest eingearbeitet sind und keinen Abrieb zeigen. Dies ist bislang mit leafing-Metallpigmenten, die beispielsweise im Pulverlack eingesetzt werden, nicht zuverlässig möglich.

Die mit Kunstharzen beschichteten Metallpigmente enthalten eine Beschichtung aus Polymeren. Diese Polymere werden ausgehend von Monomeren auf die Metallpigmente polymerisiert. Die Kunstharze umfassen Acrylate, Methacrylate, Ester und/oder Urethane. Bei einer bevorzugten Ausführungsform wird das beschichtete Metallpigment mit mindestens einem Methacrylat und/oder Acrylat beschichtet. Besonders bevorzugt werden Metallpigmente verwendet, die gemäß der Lehre des EP 0 477 433 A1, die hiermit unter Bezugnahme aufgenommen ist, hergestellt wurden. Derartige Pigmente enthalten zwischen dem Metallpigment und der Kunstharzbeschichtung ein organofunktionelles Silan, welches als Haftvermittler dient. Besonders bevorzugt sind hierbei Beschichtungen aus, vorzugsweise mehrfach vernetzten. Acrylaten und/oder Methacrylaten. Derartige Überzüge stellen bereits einen gewissen, wenn auch nicht völlig zuverlässigen Schutz gegenüber dem wässrigen Medium von Elektrotauchlacken dar. Ähnliche Pigmente werden in der DE 36 30 356 C2 beschrieben, wobei hier im Unterschied zwischen dem Metallpigment und der Kunstharzbeschichtung eine ethylenisch ungesättigte Carbonsäure und/oder Phosphorsäure-Mono oder Diester als Haftvermittler angeordnet sind.

Beispiele für derartige Vernetzer sind: Tetraethylenglycoldiacrylat (TEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldi-methacrylat (TEGDMA), Butyldiglycolmethacrylat (BDGMA), Trimethylolpropantri-methacrylat (TMPTMA), 1,3-Butandioldimethacrylat (1,3-BDDMA), 1,4-Butandioldi-methacrylat (1,4-BDDMA), 1,6-Hexandioldimethacrylat (1,6-HDMA), 1,6-Hexan-dioldiacrylat (1,6-HDDA), 1,12-Dodecandioldimethacrylat (1,12-DDDMA), Neopentyl-glycoldimethacrylat (NPGDMA), Besonders bevorzugt ist Trimethylolpropantrimethacrylat (TMPTMA). Diese Verbindungen sind kommerziell erhältlich bei Elf Atochem Deutschland GmbH, D-40474 Düsseldorf Deutschland oder Rohm & Haas, In der Kron 4, 60489 Frankfurt / Main, Deutschland.

Die Dicke der Kunstharzbeschichtung beträgt vorzugsweise 2 bis 50 nm, weiter bevorzugt 4 bis 30 nm und besonders bevorzugt 5 bis 20 nm. Der Anteil an Kunstharz, jeweils bezogen auf das Gewicht des unbeschichteten Metallpigments, ist im einzelnen von der Größe der Metallpigmente abhängig und beträgt vorzugsweise 1 bis 25 Gew.-%, weiter bevorzugt 2 bis 15 Gew .-% und besonders bevorzugt 2,5 bis 10 Gew.-%.

Das Beschichtungsmittel wird nach der Ausbildung der Kunstharzschicht auf die Metallpigmente aufgebracht. Die Kunstharzschicht kann die Pigmente vollkommen umschließen, sie kann jedoch auch nicht ganz geschlossen vorliegen oder Risse aufweisen. Durch Verwendung eines Beschichtungsmittels mit Bindemittelfunktionalitäten von anodischen Tauchlack-Bindemitteln und funktionellen Gruppen zur Anhaftung und/oder Anbindung an die Pigmentoberfläche werden mögliche Korrosionsstellen, die durch derartige Risse oder durch eine nicht vollständige Beschichtung an dem Metallpigment hervorgerufen werden können, verhindert. Das Beschichtungsmittel, insbesondere wenn es an die metallische Pigmentoberfläche bindet, vermag in derartige Lücken oder Risse in der Kunstharzbeschichtung einzudringen und somit die erforderliche Korrosionsstabilität zu bewirken. Lediglich mit Kunstharz beschichtete Metallpigmente, die ohne Beschichtungsmittel behandelt werden, sind in der anodischen
Elektrotauchlackierung nicht wirksam.

Bei einer Elektrotauchlackierung werden einem Elektrotauchlack zugesetzte konventionelle Farbpigmente auf dem Werkstück durch einen eher zufälligen Prozeß abgeschieden. Der Elektrotauchlack wird hier stets während der Abscheidung heftig gerührt. Dadurch findet im wesentlichen der Stofftransport zum Werkstück statt (Konvektion). Erst innerhalb der sich ausbildenden Nernstschen Diffusionsschicht erfolgt eine elektrophoretische Wanderung der geladenen Bindemittelteilchen im elektrischen Feld. Die Konzentration der Farbpigmente im Abscheidebad ist sehr hoch (ca. 10 Gew.-%). Durch das sich abscheidende Bindemittel werden die Farbpigmente mitgerissen. Eine elektrophoretische Wanderung der Farbpigmente im elektrischen Feld erfolgt nicht.

Metallpigmente sind per se nicht in Elektrotauchlacken einsetzbar. Selbst wenn sie durch eine geeignete Schutzschicht, wie beispielsweise einem Metalloxid oder einem Kunstharz, korrosionsstabil gegenüber dem wässrigen Medium des Elektrotauchlackes sind, werden sie entweder gar nicht abgeschieden oder aber nach einer anfänglichen Abscheidung nach wenigen Stunden bis Tagen nicht mehr abgeschieden (mangelnde Badstabilität).

Es wurde nun überraschenderweise gefunden, dass die erfindungsgemäßen Metallpigmente sich zuverlässig und über längere Zeiten im anodischen Elektrotauchlack abscheiden lassen und der Elektrotauchlack eine Badstabilität von mehr als. 60 Tagen aufweist. Die in dem anodischen Elektrotauchlack enthaltenen erfindungsgemäßen Metallpigmente werden mithin auch noch nach 60 Tagen, bevorzugt nach 90 Tagen zuverlässig auf dem Werkstück abgeschieden.

Das Beschichtungsmittel weist dabei für anodische Elektrotauchlacke geeignete oder typische Bindemittelfunktionalitäten auf und eine Säurezahl von 15 bis 300 mg KOH/g Beschichtungsmittel.

Es wird vermutet, dass die efindungsgemäßen Metallpigmente an ihrer Oberfläche geladene oder ladungsgebende funktionelle Gruppen enthalten. Die erfindungsgemäßen Elektrotauchlackpigmente sind an der Oberfläche vorzugsweise negativ geladen. Das Beschichtungsmittel weist bevorzugt Funktionalitäten auf, die denen des für den jeweiligen Elektrotauchlack verwendeten Bindemittels oder Bindemittel entsprechen. Weiterhin ist bevorzugt, daß auch die an der Pigmentoberfläche anhaftenden oder anbindenden funktionellen Gruppen sauer bzw. negativ geladen sind. Es wird vermutet, dass auf diese Weise die Oberfläche der erfindungsgemäßen Metallpigmente chemisch den Bindemitteln des Elektrotauchlackes angepasst wird. Dies ermöglicht, dass die Metallpigmente im elektrischen Feld einerseits elektrophoretisch wandern können und andererseits am Abscheidemechanismus der Elektrotauchlacke teilnehmen.

Vorzugsweise ist das bei den erfindungsgemäßen Elektrotauchlackpigmenten verwendete Beschichtungsmittel anodisch abscheidbar.

Das Beschichtungsmittel kann seiner chemischen Natur her ein Additiv oder auch ein Bindemittel oder eine Bindemittelkomponente sein. Die Bindemittelfunktionalitäten können auch aus der Gruppe, die aus auspolymerisierten Polyepoxiden, Epoxidharzestern, modifizierten Polyepoxiden, Siliconharzen, Polyurethanen, Polyestern, Polyacrylaten, Polymethacrylaten, Polyacrylat/methacrylaten, Melaminharzen, Maleinaten, Maleinatölen, maleinisierten Polybutadienharzen und Mischungen davon besteht, ausgewählt sein. Es ist bevorzugt, daß das Beschichtungsmittel wenigstens drei, beispielsweise vier, fünf, sechs oder mehr Bindemittelfunktionalitäten, die gleich oder voneinander verschieden sein können, aufweist.

So können beispielsweise Polyester eingesetzt werden. Diese enthalten jedoch noch für anodische Tauchlacke vorzugsweise nicht veresterte Carboxylgruppen oder Polyolgruppen, welche als funktionelle Gruppen zur Anbindung an die Metallpigmentoberfläche dienen.

Weiterhin kann das Beschichtungsmittel beispielsweise auspolymerisierte Epoxideinheiten besitzen. Hierunter sind Polyethereinheiten zu verstehen, aber auch Harze auf Basis von Phenolen oder Bisphenolen, die mit Epoxiden polymerchemisch umgesetzt wurden.

Des weiteren enthalten die Beschichtungsmittel funktionelle Gruppen, die eine Anhaftung und/oder Anbindung an die Pigmentoberfläche bewirken oder bewirken können. Die Pigmentoberfläche kann dabei direkt die Metallpigmentoberfläche sein. Die Pigmentoberfläche kann jedoch auch die mit Fettsäure(n) oder mit Kunstharz beschichtete Metallpigmentoberfläche sein. Auf diese Weise können die Beschichtungsmittel zuverlässig und in ausreichendem Maße auf den Metallpigmenten verankert werden.

Diese funktionellen Gruppen sind beispielsweise Phosphonsäuren, Phosphonsäureester, Phosphorsäuren, Phosphorsäureester, Carboxylate, Sulphonate und/oder Polyole.

Derart funktionalisierte Beschichtungsmittel tragen zur Korrosionsstabilität der Metallpigmente im wässrigen Elektrotauchlack bei. So kann auch überraschenderweise die Gasung, beispielsweise die Wasserstoffentwicklung von leafing-Aluminiumpigmenten wirksam unterdrückt werden.

Die Beschichtungsmittel der efindungsgemäßen Metallpigmente müssen ferner eine Säurezahl von 15 bis 300 mg KOH/g Beschichtungsmittel besitzen. Die hierfür notwendigen sauren Gruppen können von den funktionellen Gruppen stammen, die eine Anhaftung oder Anbindung an die Pigmentoberfläche bewirken oder bewirken können.

Diese sauren Gruppen verleihen dem erfindungsgemäßen Elektrotauchlackpigment vermutlich genügend negative Oberflächenladungen, um einerseits im überwiegend wässrigen Medium des Elektrotauchlackes gut dispergiert zu werden und andererseits unter den Bedingungen einer anodischen Tauchlackierung im elektrischen Feld elektrophoretisch wandern zu können, was auch als Migration bezeichnet werden kann, um schließlich innerhalb der Nernstschen Diffusionsschicht vor der Anode mittels des oben erläuterten Mechanismus am
Abscheidemechanismus teilnehmen zu können.

Bevorzugt hat das Beschichtungsmittel eine Säurezahl von 17 bis 150 mg KOH/g Beschichtungsmittel und besonders bevorzugt von 20 bis 100 mg KOH/g Beschichtungsmittel.

Beschichtungsmittel mit einer Säurezahl von unter 15 mg KOH/g Beschichtungsmittel haben sich als nicht geeignet erwiesen.

Die Säurezahl des Beschichtungsmittels kann gemäß der Norm DIN EN ISO 3682 bestimmt werden.

Das Beschichtungsmittel kann zuvor mittels geeigneter, dem Fachmann bekannter Extraktionsverfahren zumindest teilweise vom Metallpigment abgelöst, isoliert, rückgewogen und mittels gängiger Analyseverfahren analysiert werden.

Bei den erfindungsgemäßen Elektrotauchlackpigmenten werden bevorzugt als Beschichtungsmittel modifizierte Esterharze verwendet. Besonders bevorzugt werden modifizierte Polyesterharze, wie mit Polyol modifizierte Polyesterharze verwendet. Ein Beispiel ist das Produkt Setal L 6306 SS-60 (Fa. Akzo Nobel). Hier handelt es sich um einen polyolmodifizierten Polyester mit einer Säurezahl von ca. 20 mg KOH/g und einem Hydroxylgehalt von 2,7 %.

Weiterhin bevorzugt werden als Beschichtungsmittel für die erfindungsgemäßen Elektrotauchlackpigmente modifizierte Epoxidharze und/oder Acrylatharze verwendet. Bevorzugt sind Epoxidharze, die mit Phosphorsäurederivaten, Phosphorsäureesterderivaten, Phosphonsäurederivaten und/oder Phosphonsäureesterderivaten oder deren Mischungen modifiziert sind. Derartige Funktionen besitzen offenbar eine ausreichende negative Ladung und bewirken zudem - insbesondere bei Aluminiumpigmenten - eine Verbesserung der Gasungsstabilität. Als sehr geeignete Beschichtungsmittel der Epoxidharz- und/oder Acrylatharz-modifizierten Phosphorsäureester haben sich Produkte der Resydrolreihe (Fa. Akzo Nobel, bzw. Cytec, Graz, Österreich) erwiesen.

Die Beschichtungsmittel werden vorzugsweise in Mengen von 1 bis 200 Gew.-%, bezogen auf das Gewicht des unbeschichteten Metallpigmentes, eingesetzt. Unterhalb von 1 % ist die Wirkung zu gering und die Metallpigmente werden insbesondere nach 60 Tagen Baddauer nicht mehr zuverlässig abgeschieden. Oberhalb von 200 Gew.-% wird unnötig viel Beschichtungsmittel verwendet. Entsprechend viele Metallpigmente müssen in den Elektrotauchlack eingebracht werden. Überschüssiges Beschichtungsmittel kann in diesem Fall die Eigenschaften des Elektrotauchlackes negativ beeinflussen. Bevorzugt werden die Beschichtungsmittel in Mengen von 10 bis 150 Gew.-% und besonders bevorzugt von 20 bis 100 Gew.-%, weiter bevorzugt von 30 bis 70 Gew.-%, jeweils bezogen auf das Gewicht des unbeschichteten Metallpigments, eingesetzt. Diese Angaben beziehen sich jeweils auf das Beschichtungsmittel selbst und nicht auf möglicherweise vorhandenes Lösemittel, in dem das Beschichtungsmittel in seiner kommerziell erhältlichen Darreichungsform angeboten wird.

Das Beschichtungsmittel kann, muß jedoch nicht die Metallpigmente vollständig umhüllen.

Bei einer weiteren Ausführungsform der Erfindung werden als Beschichtungsmittel für die Metallpigmente jene Bindemittel, die als Bindemittel bei der anodischen Elektrotauchlackierung verwendet werden, verwendet. Die Bindemittel müssen in diesem Fall jedoch über die oben genannten funktionellen Gruppen verfügen, um in geeigneter Weise fest auf dem Effektpigment anzuhaften oder anzubinden, da andernfalls eine Delaminierung und letztendlich Ablösung vom Metallpigment im wässrigen Tauchlack erfolgen kann. Eine derartige Anbindung kann auch gegebenenfalls durch weitere geeignete Haftvermittler wie beispielsweise organofunktionelle Silane oder modifizierte Bindemittel, die mit Haftgruppen für das Effektpigment versehen sind, erfolgen.

Für anodische Tauchlacke geeignete Bindemittel umfassen alle üblichen Bindemittel mit Säurezahlen von 15 bis 300 mg KOH/g Bindemittel, bevorzugt von 25 bis 160 mg KOH/g Bindemittel, weiter bevorzugt von 50 bis 130 mg KOH/g Bindemittel. Vorzugsweise weisen diese Bindemittel des weiteren eine Hydroxylzahl von 0 bis 160 mg KOH/g Bindemittel, bevorzugt von 30 bis 100 mg KOH/g Bindemittel auf.

Für anodische Tauchlacke sind beispielsweise folgende Harze geeignet: Polyacrylat-, Polymethacrylat-, Polyester-, Polyurethanharze, Epoxidharze, Epoxidharzester, modifizierte Epoxide und Siliconharze. Weiterhin sind Kombinationen dieser Funktionalitäten wie z.B. urethanisierte Polyesterharze, acrylierte Polyester- oder Polyurethanharze, Polyol modifizierte Polyester, Maleinatöle oder maleinisierte Polybutadienharze oder auch Melaminacrylatharze geeignet.

Zur Anbindung von Metallpigment und Beschichtungsmittel können organofunktionelle Silane der Formel R_{z}Si(OR')_{(4-z)} verwendet werden. Hierbei ist R eine organofunktionelle Gruppe, R' ist unabhängig voneinander H oder eine Alkylgruppe mit 1 bis 6 C-Atomen und z eine ganze Zahl von 1 bis 3. Bevorzugt ist R' Ethyl oder Methyl, und R enthält bevorzugt als funktionale Gruppen Acrylat-, Methacrylat-, Vinyl-, Isocyanato-,Hydroxy-, Carboxy-, Thiol-, Cyano- oder Ureidogruppen.

Derartige Silane sind kommerziell verfügbar. Beispielsweise sind dies viele Vertreter der von der Fa. Degussa, Rheinfelden, Deutschland hergestellten und unter dem Handelsnamen "Dynasylan®" vertriebenen Produkte bzw. der von der Fa. OSi Specialties produzierten Silquest®-Silane oder der Fa. Wacker, Burghausen, Deutschland produzierten GENOSIL®-Silane.

Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfid (Silquest A-1289), Bis-(3-Triethoxysilyl)disulfid (Silquest A-1589), beta-(3,4-Epoxycyclohexyl)ethyltrimethoxysilan (Silquest A-186), gamma-Isocyanatopropyltrimethoxysilan (Silquest A-Link 35, Genosil GF40), (Methacryloxymethyl)trimethoxysilan (Genosil XL 33),
Isocyanatomethyl)trimethoxysilan (Genosil XL 43)

Die funktionellen Gruppen des Silans müssen mit chemisch komplementären Gruppen des Beschichtungsmittels zur Reaktion gebracht werden, um das organofunktionelle Silan kovalent mit dem Beschichtungsmittel zu verbinden.

Ein Verfahren zur Bereitstellung der erfindungsgemäßen Metallpigmente umfasst die Belegung des Metallpigmentes mit dem Beschichtungsmittel. Es umfasst folgende Schritte:
(a) Beschichten eines Metallpigmentes mit dem in einem Lösemittel gelösten oder dispergierten Beschichtungsmittel,
(b) optional Trocknen der im Schritt (a) mit dem Beschichtungsmittel beschichteten Metallpigmente,
(c) optional Anpasten der in Schritt (b) getrockneten Metallpigmente,
(d) optional Neutralisieren der in Schritt (a) oder (c) erhaltenen Metallpigmente.

Die Belegung kann auf vielerlei Wegen vonstatten gehen. Das Metallpigment kann beispielsweise in einem Mischer oder Kneter in Form einer Paste, beispielsweise in einem organischen Lösemittel oder in einem Gemisch aus organischem Lösemittel und Wasser, vorgelegt werden. Anschließend gibt man das Beschichtungsmittel hinzu und lässt dieses für mindestens 5 min auf das Metallpigment einwirken. Das Beschichtungsmittel wird bevorzugt in Form einer Lösung oder Dispersion zugegeben. Hierbei kann es sich um eine wässrige Lösung oder um eine überwiegend organische Lösung handeln.

Weiterhin kann das Metallpigment zunächst in einem Lösungsmittel dispergiert werden. Unter Rühren gibt man anschließend das Beschichtungsmittel hinzu. Hierbei sollte bevorzugt das Lösungsmittel, in dem das Beschichtungsmittel gelöst ist, mischbar sein mit jenem, in dem das Metallpigment dispergiert ist. Bei Bedarf können höhere Temperaturen, bis zum Siedepunkt des Lösemittels oder des Lösemittelgemisches, eingestellt werden, meist reicht jedoch Raumtemperatur aus, um das Beschichtungsmittel wirksam auf das Metallpigment aufzubringen.

Danach wird das Pigment vom Lösungsmittel befreit und entweder zum Pulver getrocknet und/oder ggfs. in einem anderen Lösungsmittel angepastet. Als Lösemittel kommen Wasser, Alkohole wie beispielsweise Ethanol, Isopropanol, n-Butanol oder Glycole wie beispielsweise Butylglycol in Frage. Das Lösemittel sollte mit Wasser vermischbar sein. Das erfindungsgemäße Pigment kommt als Paste oder Pulver in den Handel. Die Pasten haben einen nicht flüchtigen Anteil von 30 bis 70 Gew.-%, bezogen auf die gesamte Paste. Bevorzugt besitzt die Paste einen nicht flüchtigen Anteil von 40 bis 60 Gew.-% und besonders bevorzugt von 45 bis 55 Gew.-%.

Die Pastenform ist eine bevorzugte staubfreie und homogene Präparationsform der erfindungsgemäßen Elektrotauchlackpigmente. Die erfindungsgemäßen Elektrotauchlackpigmente können in staubfreier und homogener Form auch als Pellets, Würstchen, Tabletten, Briketts oder Granulat vorliegen. Die vorgenannten Präparationsformen können durch Pelletieren, Extrudieren, Tablettieren, Brikettieren bzw. Granulieren in dem Fachmann bekannter Weise hergestellt werden. In diesen kompaktierten Präparationsformen ist das Lösemittel weitergehend entfernt worden. Der restliche Lösemittelgehalt liegt üblicherweise in einem Bereich von weniger als 15 Gew.-%, bevorzugt weniger als 10 Gew.%, weiter bevorzugt zwischen 0,5 und 5 Gew.-%.

Das Beschichtungsmittel kann vor dem Beschichten des Metallpigmentes in einer neutralisierten oder teilneutralisierten Form vorliegen. Es kann jedoch auch nach dem Beschichtungsvorgang neutralisiert werden. Die Neutralisierung/Teilneutralisierung kann auch erst mit der pH-Einstellung des Elektrotauchlackes erfolgen.

Zur Neutralisation der sauren Funktionalitäten eigenen sich übliche Basen. Beispiele hierfür sind: NaOH, KOH, Ammoniak, LiOH, Amine wie Diethylamin, Triethylamin, Morpholin, Ethylendiamin oder Alkanolamine wie Dimethylaminoethanol, Dimethylamino-2-methylpropanol oder Trimethylethanolamin oder Mischungen verschiedener Basen. Es sollte soviel Base verwendet werden, dass mindestens 25%, bevorzugt 40% der sauren Gruppen des mit dem Beschichtungsmittel belegten Metallpigmentes in neutraler Form vorliegen. Hierbei werden als saure Gruppen auch funktionelle Gruppen, die vom Metallpigment selbst stammen können, gezählt. Dies können beispielsweise Acrylsäurefunktionen im Fall eines mit Kunstharzen beschichten Metallpigmentes oder Stearinsäure im Fall von leafing-Metallpigmenten als Ausgangspigmente sein.

Es können die Schritte (a) und (b) auch zu einem Schritt zusammengefaßt werden, indem das Beschichtungsmittel als Lösung oder Dispersion auf in einem Gasstrom bewegte Metallpigmente aufgebracht wird.

Insbesondere wenn das Beschichtungsmittel ein anodisches Tauchlack-Bindemittel ist, können die erfindungsgemäßen Elektrotauchlackpigmente durch das Verfahren mit den folgenden Schritten hergestellt werden.
a) Herstellen einer Lösung oder Dispersion eines für Elektrotauchlacke geeigneten Bindemittels in einem organischen Lösemittel,
b) Beschichten des Metallpigmentes mit dem Bindemittel durch
   i) Dispergieren des Metallpigmentes in der Lösung oder Dispersion von a) und anschließendem Versprühen
      oder
   ii) Versprühen der Lösung oder Dispersion aus a) auf in einem Gasstrom verwirbelte Metallpigmente,
c) optional Trocknen der mit Bindemittel beschichteten Metallpigmente in einem bewegten Gasstrom,
d) optional Anpasten des Pigmentes in Wasser und/oder einem organischem Lösemittel,
e) optional Neutralisieren mit einer Base.

Das Neutralisieren und Anpasten der Pigmente kann dabei wie oben beschrieben erfolgen.

Bevorzugt werden die Schritte b) und c) in einem Verfahrensschritt zusammengefaßt, indem das Versprühen und Trocknen in einem Sprühtrockner durchgeführt wird. Dabei werden bevorzugt leicht flüchtige Lösemittel wie beispielsweise Aceton und/oder Ethylacetat verwendet.

Die erfindungsgemäßen Elektrotauchlackpigmente werden in anodischen Elektrotauchlacken oder beim Elektrotauchlackieren verwendet.

Die folgenden Beispiele erläutern die Erfindung näher, ohne sie jedoch einzuschränken.

### Erfindungsgemäßes Beispiel 1:

80 g einer Paste aus 9 g PCA 214 (mit organischen Polymeren beschichtetes Aluminiumpigment mit d₅₀ = 32 µm; Fa. Eckart GmbH & Co. KG, Fürth, Deutschland) werden mit 80 g Butylglycol zu einer homogenen Pigmentpaste vermischt. Anschließend werden 40 g SETAL 6306 SS-60 (Polyol modifizierter Polyester; Fa. Akzo Nobel, Akzo Nobel Resins bv, P.O. Box 79, 4600 AB Bergen op Zoom, Niederlande) unter Rühren hinzugegeben. Diese Pigmentpaste wird über Nacht stehen gelassen.

### ErfindungsgemäBes Beispiel 2:

Die Herstellung erfolgt wie in Beispiel 1, jedoch mit einem Aluminiumeffektpigment mittlerer Teilchengröße D₅₀ = 18 µm, PCA 9155 (Fa. Eckart GmbH & Co. KG).

### Erfindungsgemäßes Beispiel 3:

Die Herstellung erfolgt wie in Beispiel 1, jedoch mit einem leafing Aluminiumeffektpigment mittlerer Teilchengröße D₅₀ = 18 µm, VP 53 976 (Fa. Eckart GmbH & Co. KG).

### Vergleichsbeispiel 4:

PCA 9155 (Fa. Eckart GmbH & Co. KG), ein mit Kunstharz beschichtetes Aluminiumeffektpigment mittlere Teilchengröße D₅₀ = 18 µm in Pastenform (Festkörper 50 Gew.-%) wird ohne weitere Beschichtung in den Elektrotauchlack eingesetzt. Im Gegensatz zu den erfindungsgemäßen Beispielen 1 bis 3 wird hier der Polyol modifizierte Polyester (SETAL 6306 SS-60, Fa. Akzo Nobel) erst bei der Zugabe des handelsüblichen anodischen Tauchlacks (Fa. Frei Lacke) in das Elektrotauchbad eingetragen. Die Zugabe erfolgt somit nicht wie in den erfindungsgemäßen Beispielen 1 bis 3 durch eine direkte Anpastung des Additivs (Beschichtungsmittel) mit dem Aluminiumeffektpigment vor dem Elektrotauchlackieren.

### Vergleichsbelspiel 5

PCA 9155 (Fa. Eckart GmbH & Co. KG), ein mit Kunstharz beschichtetes Aluminiumeffektpigment mittlerer Teilchengröße D₅₀ = 18 µm in Pastenform (Festkörper 50 Gew.-%) ohne weitere Beschichtung. Das Phosphorsäure modifizierte Acrylatharz wird erst bei der Zugabe des handelsüblichen anodischen Tauchlacks (Fa. Frei Lacke) in das Elektrotauchbad eingetragen. Die Zugabe erfolgt somit nicht durch eine direkte Anpastung des Additivs (Beschichtungsmittel) mit dem Aluminiumeffektpigment vor dem Elektrotauchlackieren.

### Vergleichsbeispiel 6

PCA 9155 (Fa. Eckart GmbH & Co. KG), ein mit Kunstharz beschichtetes Aluminiumeffektpigment mittlerer Teilchengröße D₅₀ = 18 um in Pastenform (Festkörper 50 Gew.-%) ohne weitere Beschichtung.

Hier wird dem Tauchlack kein weiteres Additiv (Beschichtungsmittel) zugegeben.

### Herstellung der Elektrotauchlacke und deren Abprüfung:

Jeweils 26 g der Metallpigmentpasten der Beispiele 1 bis 3 werden 26 g eines Acrylatharzes (Fa. Emil Frei GmbH & Co. Lackfabrik - Am Bahnhof 6 - D-78199 Bräunlingen) in 26 g Butylglycol vermischt. Diese Pigmentpaste wird über Nacht stehen gelassen.

Anschließend wird die Pigmentpaste zu 230 g eines bereits fertig gemischten, handelsüblichen anodischen Tauchlacks auf Acrylat- und Melaminharzbasis unter schonendem Rühren mittels einer Dissolverscheibe bei 800 U/min vermischt und weitere 36 g VE-Wasser hinzugegeben.

Zu dieser Dispersion werden unter Rühren 3,5 g Dimethanolamin in 170 g VE-Wasser hinzugegeben. Nach weiteren 10 min Rühren wurde unter ständigem Rühren gerade soviel destilliertes Wasser zugegeben, bis der sog. "Wasserberg" bricht, und der Lack ein dünnflüssiges Erscheinungsbild aufweist (ca. 620 g VE-Wasser).

Die nach dieser Rezeptur hergestellten Tauchlacke für die anodische Tauchlackierung zeichnen sich durch eine Viskosität von 9 ± 1 Sekunden, bei einer Temperatur von 20°C, gemessen im DIN 4 Auslaufbecher, aus. Der Lösungsmittelanteil des Bades beträgt ca. 3,0 Gew.%, bezogen auf das Gewicht des gesamten Elektrotauchlackes. Die Elektrotauchlacke besitzen einen Festkörpergehalt von 12 ± 0,1 Gew.%, bezogen auf das Gewicht des gesamten Elektrotauchlackes. Der Anteil der Aluminiumpigmente beträgt ca. 1 Gew.%. Der gemessene pH-Wert der Elektrotauchlackbäder liegt bei 25°C bei pH = 8,2.

Der elektrochemische Abscheidevorgang erfolgt in einem elektrisch leitenden Gefäß, einem sogenannten Tank, welches aus einem elektrisch leitfähigen Material besteht, und im Stromkreis als Kathode geschaltet wird. Das zu beschichtende Werkstück, im erfindungsgemäßen Beispiel ein Blech der Abmessungen 7,5 cm x 15,5 cm, wird als Anode geschaltet und zu 2/3 seiner Länge in das Elektrotauchlackbad eingehängt.

Um eine Sedimentation sowie die Bildung von Toträumen zu verhindern, wird der Elektrotauchlack mit einer mittleren Strömungsgeschwindigkeit von ca. 0,1 m/s bewegt. Anschließend wird eine Spannung von 100 V über einen Zeitraum von 120 Sekunden angelegt. Das so beschichtete Werkstück wird anschließend gründlich mit destilliertem Wasser abgespült, um Reste von nicht koaguliertem Harz zu beseitigen. Dem Werkstück wird sodann ein Zeitraum von 10 Minuten zum Ablüften gewährt. Anschließend erfolgt die Vernetzung und Einbrennung des Elektrotauchlacks für-20 Minuten bei 180°C. Die so erzielte Lackschichtdicke beträgt 30 ± 2 µm.

Die nach den erfindungsgemäßen Beispielen 1 bis 3 hergestellten Elektrotauchlacke weisen eine äußerst hohe Lager- und Abscheidestabilität in Bezug auf die darin enthaltenen Aluminiumeffektpigmente auf. Dies ist aus Tabelle 1 ersichtlich. Die Lacke wurden bei Raumtemperatur gelagert und in einem Zeitintervall von 7 Tagen elektrotauchlackiert. Nach 92 Tagen wurden diese Tests abgebrochen.

Weiterhin wurden Proben der erfindungsgemäßen Beispiele 1 bis 3 für 30 Tage bei 40°C gelagert. Anschließend wurden sie wie oben beschrieben in einen Elektrotauchlack eingearbeitet und elektrotauchlackiert. Hinsichtlich der optischen Eigenschaften dieser Applikationen wurde kein Unterschied zu Applikationen mit frisch hergestellten Proben gefunden.

Die Beispiele 1 bis 3 sowie die Vergleichsbeispiele 4 bis 6 wurden ebenfalls Gasungstests unterzogen. Dafür wurden 25 g der Elektrotauchlacke in eine Gasflasche mit Doppelkammerrohraufsatz bei 40 °C temperiert und die entwickelte Gasmenge (H₂, welches durch die Reaktion der Aluminiumpigmente mit Wasser entsteht) gemessen. Der Test gilt als bestanden, wenn nach 30 Tagen nicht mehr als 20 ml Wasserstoff entwickelt wurden.
Die Testergebnisse sind in Tabelle 1 zusammengefasst.

**Tabelle 1: Verhalten der anodischen Tauchlacke**

| **Probe** | **Abscheidestabilität (in d)** | **Gasung Nach 30 Tagen (ml H₂)** |
|---|---|---|
| Beispiel 1 | >92 d | 5 |
| Beispiel 2 | >92 d | 5 |
| Beispiel 3 | > 92 d | 5 |
| Vergleichsbeispiel 4 | < 7 d | 5 |
| Vergleichsbeispiel 5 | < 7 d | 6 |
| Vergleichsbeispiel 6 | < 7 d | Nach 13 Tagen > 30ml |

Für die erfindungsgemäßen Beispiele 1 - 3 wurden auch nach mehr als 92 Tagen Lagerzeit bei Raumtemperatur reproduzierbare Ergebnisse hinsichtlich des optischen Erscheinungsbildes der beschichteten Testbleche erhalten. Weiterhin zeigten sie keine nennenswerte Gasung in den wässrigen Elektrotauchlacken.

Die Pigmente der Vergleichsbeispiele 4 und 5 waren ebenfalls gasungsstabil, wiesen jedoch praktisch keine Abscheidestabilität auf. Die ohne erfindungsgemäße Beschichtung versehenen Aluminiumpigmente des Vergleichsbeispiels 6 sind weder gasungsstabil noch besitzen sie ausreichende Abscheidestabilität.

### Vergleichsbeispiel 7 (Metallpigment-haltiger Pulverlack):

9 g eines handelsüblichen Metalleffektpigments für Pulverlack, Spezial PCA 214 (Fa. Eckart GmbH & Co. KG), werden mit 291 g eines Pulverklarlacks, AL 96 Polyester PT 910 System (Fa. DuPont), und 0,6 g eines sogenannten "free-flow-additives", Acematt OK 412 (Fa. Degussa), in einem Plastikbeutel innig miteinander vermengt. Der Inhalt wird anschließend direkt in einen Mischbehälter umgefüllt, welcher vom Aufbau und Form einem handelsüblichen Küchenmixgerät gleicht (Thermomix der Fa. Vorwerk), und 4 Minuten bei 25°C auf einer mittleren Rührgeschwindigkeitsstufe vermengt. Diese Vorgehensweise entspricht dem im Pulverlack gängigen "dry-blend-Verfahren". Der so hergestellte Pulverlack wird mittels der üblichen Korona-Aufladungstechnik (GEMA Elektrostatikspritzpistole PG 1-B) auf ein übliches Prüfblech ("Q-Pannel") appliziert. Die Applikationsbedingungen der hier angewandten Pulverlacktechnik entsprechen den folgenden:
Pulverschlauchanschluss: 2 bar; Spülluftanschluss: 1,3 bar Spannung: 60 kV;
Materialflussregler: ca. 50 % Abstand Pistole-Blech: ca. 30 cm.

Anschließend erfolgt das Einbrennen und die Vernetzung des Pulverlacksystems im Ofen. Die Einbrennzeit beträgt 10 Minuten bei einer Temperatur von 200 °C. Die bei diesem Verfahren zu erzielende Trockenschichtstärke beträgt 50-75 µm.

### Vergleichsbeispiel 8 (Metalipigment-haltiger Pulverlack):

Wie das Vergleichsbeispiel 10, jedoch wurde als Metalleffektpigment Spezial PCA *9155* (Fa. Eckart GmbH & Co. KG) verwendet.

3 Die unterschiedlichen Applikationen bei den erfindungsgemäßen Beispielen 1-3 wurden mit den nach Pulverlacktechnologie beschichteten Substraten der Vergleichsbeispiele 7 und 8 verglichen. Zur vergleichenden Beurteilung wurden wie aus den erfindungsgemäßen Beispielen 1-3 und den Vergleichsbeispielen 7-8 ersichtlich , Aluminiumeffektpigmente ähnlicher Teilchengröße und coloristischer Eigenschaften eingesetzt.

Überraschenderweise zeigen die Applikationen bei den erfindungsgemäßen Beispielen 1 bis 3 eine hervorragende Deckfähigkeit, welche in Güte und Qualität der der Pulverlackbeschichtung der Vergleichsbeispiele 7 und 8 entsprechen.

Der Vergleich der optischen Eigenschaften erfolgt über den visuellen Eindruck des Beobachters Überraschenderweise zeigt sich hier, dass die erfindungsgemäßen Beispiele 1 und 2 hinsichtlich Helligkeit und metallischem Effekt keinen nennenswerten Unterschiede zur konventionellen Pulverlackapplikationen bei den Vergleichsbeispielen 7 und 8 aufweisen.

Bei der Beurteilung der optischen Eigenschaften wird Bezug auf die DIN 53 230 genommen. Bei der Prüfung von Anstrichstoffen, Lackierungen und ähnlichen Beschichtungen müssen die Eigenschaften und/oder deren Änderungen oft subjektiv beurteilt werden. Die DIN 53 230 legt für diesen Fall ein einheitliches Bewertungssystem fest. In diesem wird beschrieben, wie Prüfergebnisse, welche nicht durch unmittelbar erhaltene Messwerte angegeben werden können, zu bewerten sind. Zur Beurteilung der Lackierungen gemäß den erfindungsgemäßen und Vergleichsbeispielen 1-3 und 4-8 wird Bezug auf die in der DIN 53 230 unter 2.1 erläuterten "Festen Bewertungsskala" genommen. Diese feste Bewertungsskala stellt eine Skala zur Bewertung des Grades von Eigenschaften dar. In ihr wird der bestmögliche Wert. mit der Kennzahl 0, der geringstmögliche Wert mit der Kennzahl 5 bezeichnet, wobei der Begriff "geringstmöglicher Wert" so zu verstehen ist, dass eine Veränderung oder Verschlechterung über diesen Wert hinaus anwendungstechnisch nicht mehr von Interesse ist

In Tab. 2 sind die in Bezug auf die DIN 53230 Abs.2.1 ermittelten coloristischen und optischen Eigenschaften wiedergegeben. Die Ermittlung der Kennzahlen erfolgte durch den subjektiven Eindruck mehrerer Personen. In allen Fällen konnte eine Übereinstimmung des subjektiven Eindrucks der beurteilenden Personen festgestellt werden.

**Tab.2: Optischer Vergleich der Elektrotauchlackapplikationen der erfindungsgemäßen Beispiele 1 bis 3 und der Vergleichsbeispiele 4-8**

| Probe | Mittlere Teilchengröße D₅₀ [µm] | Deckfähigkeit [Kennzahl] | Helligkeit [Kennzahl] | Genereller visueller Eindruck |
|---|---|---|---|---|
| erfindungsgemäßes Beispiel 1 | 32 | 1 | 1 | sehr guter metallischer "sparkling"-Effekt |
| erfindungsgemäßes Beispiel 2 | 16 | 0 | 1 | sehr metallisch geringerer "sparkling"- Effekt |
| erfindungsgemäßes Beispiel 3 | 18 | 1 | 1 | sehr guter metallischer leafing Effekt, hoher Glanz, abriebsbeständig |
| Vergleichsbeispiel 4 | 16 | 3 | 3 | geringerer metallischer Effekt durch fehlende Deckfähigkeit |
| Vergleichsbeispiel 5 | 16 | 3 | 3 | geringerer metallischer Effekt durch fehlende |
| | | | | Deckfähigkeit |
| Vergleichsbeispiel 6 | 18 | 5 | 5 | Praktisch kein Metallpigment abgeschieden |
| Vergleichsbeispiel 7 | 32 | 0 | 1 | sehr guter metallischer "sparkling"-Effekt |
| Vergleichsbeispiel 8 | 16 | 0 | 0 | sehr metallisch geringerer "sparkling"- Effekt |

Der oben aufgezeigte Vergleich zeigt, dass die erfindungsgemäßen Elektrotauchlackpigmente und Pigmentpräparationen 1 und 2 hinsichtlich optischer Eigenschaften vergleichbar sind mit den schon seit vielen Jahren im Markt etablierten Pulverlackpigmenten und Applikationen. Aus dem Vergleich der Kennzahlen der Elektrotauchlackierungen bei den erfindungsgemäßen Beispielen 1 und 2 mit den Pulverlackierungen bei dem Vergleichsbeispiel 7 und 8 geht eindeutig hervor, dass die optischen Eigenschaften in Bezug auf Deckung, Glanz und metallischen Effekt nahezu identisch sind.

Die Elektrotauchlackierung gemäß dem erfindungsgemäßen Beispiel 3 zeigt überraschenderweise auch einen optischen Eindruck, der an eine konventionelle leafing- Lackierung erinnert. Im Gegensatz zu konventionellen leafing-Lackierungen war die Applikation jedoch überraschenderweise abriebstabil.

Die Lackierungen bei den Vergleichsbeispielen 4 und 5, bei welchen das Beschichtungsmittel erst im letzten Schritt der Elektrotauchlackherstellung direkt in selbiges eingetragen wurde, weist Abweichungen auf. Bei diesen Varianten zeigen sich deutliche Einbußen hinsichtlich Deckung, Glanz und einhergehend damit im metallischen Effekt.

Ein ohne Beschichtungsmittel behandeltes Metallpigment (Vergleichsbeispiel 6) lässt sich im anodischen Elektrotauchlack bzw. bei der Elektrotauchlackierung praktisch nicht abscheiden, obwohl das Metallpigment eine Kunstharzhülle aufweist.

Es wird vermutet, dass es notwendig ist, dass das Beschichtungsmittel unmittelbar auf das Metallpigment aufgebracht werden muß und nicht später zu dem Elektrotauchlack zugegeben werden kann. Es wird weiter vermutet, dass das Beschichtungsmittel mit seinen funktionellen Gruppen eine physisorptive und/oder chemisorptive Anhaftung oder Anbindung mit der Pigmentoberfläche ausbildet, welche dann eine entscheidende Schlüsselrolle im Abscheideverhalten des Pigments zu spielen scheint.

## Patentansprüche

1. Verwendung von Metallpigmenten als Elektrotauchlackpigmente,
wobei die Metallpigmente plättchenförmige, mit wenigstens einem Beschichtungsmittel beschichtete Metallpigmente sind und das Beschichtungsmittel
(a) ein oder mehrere Bindemittelfunktionalitäten von anodischen Tauchlack-Bindemitteln sowie
(b) eine oder mehrere funktionelle Gruppen zur Anhaftung oder Anbindung an die Pigmentoberfläche aufweist und
(c) eine Säurezahl von 15 bis 300 mg KOH/g Beschichtungsmittel hat und die Metallpigmente einen d₅₀-Wert der
Größensummendurchgangsverteilung von 4 bis 35 µm besitzen.

2. Verwendung nach Anspruch 1,
**dadurch gekennzeichnet,**
**dass** die Metallpigmente aus der Gruppe, die aus leafing-Metallpigmenten, mit Kunstharz(en) beschichteten Metallpigmenten und Mischungen davon besteht, ausgewählt sind.

3. Verwendung nach Anspruch 1 oder 2,
**dadurch gekennzeichnet,**
**dass** die plättchenförmigen Metallpigmente aus Metallen oder Legierungen bestehen, die aus der Gruppe, die aus Aluminium, Kupfer, Zink, Messing, Eisen, Titan, Chrom, Nickel, Stahl, Silber und Legierungen davon besteht, ausgewählt sind.

4. Verwendung nach einem der vorhergehenden Ansprüche,
**dadurch gekennzeichnet,**
**dass** das Beschichtungsmittel anodisch abscheidbar ist.

5. Verwendung nach einem der Ansprüche 2 bis 4,
**dadurch gekennzeichnet,**
**dass** die Kunstharzbeschichtung des Metallpigmentes mindestens ein Acrylat und/oder Methacrylat enthält.

6. Verwendung nach einem der Ansprüche 2 bis 4,
**dadurch gekennzeichnet,**
**dass** das leafing-Metallpigment ein in Gegenwart von Fettsäure oder Fettsäuren, die unverzweigte oder verzweigte Alkylketten mit vorzugsweise jeweils 10 bis 30 C-Atome aufweisen können, vermahlenes und/oder nachpoliertes Metallpigment ist.

7. Verwendung nach Anspruch 6,
**dadurch gekennzeichnet,**
**dass** die Fettsäure(n) Stearinsäure und/oder Palmitinsäure umfaßt.

8. Verwendung nach einem der vorhergehenden Ansprüche,
**dadurch gekennzeichnet,**
**dass** die Bindemittelfunktionalitäten aus der Gruppe, die aus auspolymerisierten Polyepoxiden, Polyacrylaten, Polymethacrylaten, Polyestern, Polyurethane Melaminharzen, Maleinaten, deren Copolymeren und Mischungen davon besteht, ausgewählt ist.

9. Verwendung nach einem der vorhergehenden Ansprüche,
**dadurch gekennzeichnet,**
**dass** das Beschichtungsmittel eine oder mehrere funktionelle Gruppen zur Anhaftung oder Anbindung an die Metallpigmentoberfläche oder einer auf der Metallpigmentoberfläche aufgebrachten Kunstharzoberfläche aufweist.

10. Verwendung nach Anspruch 9,
**dadurch gekennzeichnet,**
**dass** die funktionelle Gruppe vorzugsweise aus der Gruppe, die aus Phosphonsäure, Phosphonsäureester, Phosphorsäure, Phosphorsäureester, Carboxylat, Sulphonat, Polyol und deren Mischungen besteht, ausgewählt ist.

11. Verwendung nach einem der vorhergehenden Ansprüche,
**dadurch gekennzeichnet,**
**dass** das Beschichtungsmittel in einer Menge von 1 bis 200 Gew.%, bezogen auf das Gewicht des metallischen Anteils des Metallpigmentes, auf dem Pigment aufgebracht ist.

12. Verwendung nach einem der vorhergehenden Ansprüche,
**dadurch gekennzeichnet,**
**dass** das Beschichtungsmittel ein anodisches Tauchlack-Bindemittel ist.

## Claims

1. Use of metal pigments as electrophoretic paint pigments, which metal pigments are platelet-shaped metal pigments coated with at least one coating composition, and the coating composition
(a) contains one or more binding agent functions of binding agents used for anodic electrophoretic deposition and
(b) one or more functional groups to impart adhesion or binding capacity to the pigment surface, and
(c) has an acid value of 15 to 300 mg KOH/g of coating agent and the metal pigments have a d₅₀ value for the cumulative undersize distribution curve of 4 to 35 µm.

2. Use as claimed in claim 1,
**characterised in that**
the metal pigments are selected from the group comprising leafing metal pigments with metal pigments coated with synthetic resin(s) and mixtures thereof.

3. Use as claimed in claim 1 or 2,
**characterised in that**
the platelet-shaped metal pigments are selected from metals or alloys from the group comprising aluminium, copper, zinc, brass, iron, titanium, chromium, nickel, steel, silver and alloys thereof.

4. Use as claimed in one of the preceding claims,
**characterised in that**
the coating composition can be anodically deposited.

5. Use as claimed in one of claims 2 to 4,
**characterised in that**
the synthetic resin coating of the metal pigments contains at least one acrylate and/or methacrylate.

6. Use as claimed in one of claims 2 to 4,
**characterised in that**
the leafing metal pigment is a metal pigment which is ground and/or secondary ground in the presence of fatty acid or fatty acids which may contain non-branched or branched alkyl chains each with preferably 10 to 30 C atoms.

7. Use as claimed in claim 6,
**characterised in that**
the fatty acid(s) is/are stearic acid and/or palmitic acid.

8. Use as claimed in one of the preceding claims,
**characterised in that**
the binding agent functions are selected from the group comprising fully polymerised polyepoxides, polyacrylates, polymethacrylates, polyesters, polyurethanes, melamine resins, maleinates, their copolymers and mixtures thereof.

9. Use as claimed in one of the preceding claims,
**characterised in that**
the coating composition contains one or more functional groups for imparting adhesion or binding capacity to the metal pigment surface or to a synthetic resin surface applied to the metal pigment surface.

10. Use as claimed in claim 9,
**characterised in that**
the functional group is preferably selected from the group comprising phosphonic acid, phosphonic acid ester, phosphoric acid, phosphoric acid ester, carboxylate, sulphonate, polyol and mixtures thereof.

11. Use as claimed in one of the preceding claims,
**characterised in that**
the coating composition is applied to the pigment in a quantity of 1 to 200% by weight by reference to the weight of the proportion of metal of the metal pigment.

12. Use as claimed in one of the preceding claims,
**characterised in that**
the binding agent is an anodic electrophoretic deposition paint binding agent.

## Revendications

1. Utilisation de pigments métalliques en tant que pigments pour peinture électrophorétique, les pigments métalliques étant des pigments métalliques lamellaires, revêtus d'au moins une composition de revêtement, et la composition de revêtement
(a) comporte une ou plusieurs fonctionnalités liantes de liants pour revêtement anodique par immersion, et
(b) comporte un ou plusieurs groupes fonctionnels, pour adhérence ou liaison à la surface pigmentaire, et
(c) a un indice d'acide de 15 à 300 mg KOH/g de composition de revêtement, et les pigments métalliques ont une d₅₀ correspondant à une distribution granulométrique en valeur médiane de 4 à 35 µm.

2. Utilisation selon la revendication 1, **caractérisée en ce que** les pigments métalliques sont choisis dans le groupe consistant en les pigments métalliques pelliculants, les pigments métalliques revêtus d'une ou plusieurs résines synthétiques, et les mélanges de ceux-ci.

3. Utilisation selon la revendication 1 ou 2, **caractérisée en ce que** les pigments métalliques lamellaires sont constitués de métaux ou d'alliages qui sont choisis dans le groupe consistant en l'aluminium, le cuivre, le zinc, le laiton, le fer, le titane, le chrome, le nickel, l'acier, l'argent et les alliages de ceux-ci.

4. Utilisation selon l'une des revendications précédentes, **caractérisée en ce que** la composition de revêtement peut être déposée par voie anodique.

5. Utilisation selon l'une des revendications 2 à 4, **caractérisée en ce que** le revêtement, constitué de résines synthétiques, du pigment métallique contient au moins un acrylate et/ou un méthacrylate.

6. Utilisation selon l'une des revendications 2 à 4, **caractérisée en ce que** le pigment métallique pelliculant est un pigment métallique broyé et/ou repoli en présence d'un acide gras ou d'acides gras qui peuvent comporter des chaînes alkyle droites ou ramifiées ayant de préférence chacune 10 à 30 atomes de carbone.

7. Utilisation selon la revendication 6, **caractérisée en ce que** le ou les acides gras comprennent l'acide stéarique et/ou l'acide palmitique.

8. Utilisation selon l'une des revendications précédentes, **caractérisée en ce que** les fonctionnalités liantes sont choisies dans le groupe consistant en les polyépoxydes polymérisés, les polyacrylates, les polyméthacrylates, les polyesters, les polyuréthannes, les résines de mélamine, les maléates, leurs copolymères et leurs mélanges.

9. Utilisation selon l'une des revendications précédentes, **caractérisée en ce que** la composition de revêtement comprend un ou plusieurs groupes fonctionnels pour adhérence ou liaison à la surface des pigments métalliques ou à une surface de résine synthétique appliquée sur la surface du pigment métallique.

10. Utilisation selon la revendication 9, **caractérisée en ce que** le groupe fonctionnel est choisi de préférence dans le groupe consistant en l'acide phosphonique, les esters de l'acide phosphonique, l'acide phosphorique, les esters de l'acide phosphorique, les carboxylates, les sulfonates, les polyols et les mélanges de ceux-ci.

11. Utilisation selon l'une des revendications précédentes, **caractérisée en ce que** la composition de revêtement est appliquée sur le pigment en une quantité de 1 à 200 % en poids par rapport au poids de la partie métallique du pigment métallique.

12. Utilisation selon l'une des revendications précédentes, **caractérisée en ce que** la composition de revêtement est un liant pour revêtement anodique par immersion.
